# EUROPEAN PATENT APPLICATION

(11) **EP 4 424 472 A1**
(43) Date of publication of application: **04.09.2024**
(21) Application number: 23159504.2
(22) Date of filing: 01.03.2023
(51) Int. Cl.: B25F 5/00, B25G 1/00

(54) **TOOL**

(71) Applicant: Husqvarna AB, 561 82 Huskvarna (SE)
(72) Inventor: Kohl, Peter, 89257 Illertissen (DE); Öztürk, Haceli, 89604 Allmendingen (DE)
(74) Representative: Finkele, Rolf

(57) **Abstract**

A tool **(100)** includes a handle **(102)** and a pole **(104)** extending from the handle **(102)** from a first end **(106)** towards a second end **(108)** along a central pole axis **(PA)**. The tool **(100)** includes an implement **(110)**. The tool **(100)** further includes a fixation mechanism **(114)** for coupling the handle **(102)** and the pole **(104)** together. The fixation mechanism **(114)** includes a first coupling element **(116)** associated with the handle **(102),** and a second coupling element **(118)** associated with an outer surface **(105)** of the pole. The first coupling element **(116)** and the second coupling element **(118)** are adapted to be selectively engaged together. An elastic member **(120)** coupled with the pole cooperates with the first coupling element **(116)** to force the first coupling element **(116)** to engage with the second coupling element **(118)** to rotatably couple the handle **(102)** and the pole **(104)** together. The handle **(102)** includes a movable button **(122)** to allow the first coupling element **(116)** to act against the elastic member **(120)** to disengage the rotatable coupling of the handle **(102)** and the pole **(104).**

## Description

### TECHNICAL FIELD

The present disclosure relates to a tool. More specifically, the present disclosure relates to the tool, preferably a gripper, with a rotatable handle.

### BACKGROUND

A gripper or a pincer is a tool that may be used to pick up an object (e.g., waste) from the floor, top shelf, outdoor lawn, trash can, behind furniture, or other hard to reach places. The gripper is designed specifically to increase the reach of a user. In some applications, the gripper may help a user to avoid back pain which can otherwise occur while picking an object from the floor without the gripper. The gripper is handy and portable.

Such handheld tools (e.g., gripper) usually include a grip trigger handle and a pole with an implement (e.g., claws) at its end opposite to the handle. In case of grippers with asymmetric working head, there is a need to have rotatable handle bars or poles as it enables to work with different gripper or pincers positions. For efficient and effective operations of a gripper, different applications require corresponding different positions of the implement relative to the handle. Some designs of the grippers or the pincers utilize clamping nuts to provide rotatable handle bars. However, such provision is not so easy and convenient to use due to locking and unlocking of the clamping nuts so as to rotate the handle bar.

An example of a handle rotation mechanism in a lopper saw (high branch saw) is provided in Chinese utility model CN 202 680 050 U. The '050 reference describes a lopper saw that exhibits a handle connected to a pole that carries a chain saw on the other side. The handle as well as the pole exhibits a locking mechanism with interacting teeth. The handle and pole are rotationally fixed via a spring force acting between the handle and its movable locking structure. The movable locking structure incorporates a button reaching through the center of the locking structure associated with the pole. The pressing of this button acts against the spring force and thus releases the interaction of the locking structures, which in turn allows to rotate the handle against the pole.

### SUMMARY OF THE INVENTION

In view of the above, it is an objective of the present invention to solve or at least reduce the drawbacks discussed above. The objective is at least partially achieved by a tool having an easy to use and convenient rotatable coupling between a handle and a pole of the tool.

According to an aspect of the present invention, the tool includes a handle. The tool further includes a pole rotatably coupled to the handle. The pole has a first end proximate to the handle and a second end distal from the handle such that the pole extends from the handle from the first end towards the second end along a central pole axis. The tool further includes an implement fixed to the second end of the pole. The tool further includes a fixation mechanism for coupling the handle and the pole together. The fixation mechanism includes a first coupling element associated with the handle. The fixation mechanism further includes a second coupling element associated with an outer surface of the pole, such that the first coupling element and the second coupling element are adapted to be selectively engaged together to couple the handle and the pole. The fixation mechanism further includes an elastic member coupled with the pole such that the elastic member cooperates with the first coupling element to force the first coupling element to engage with the second coupling element to rotatably couple the handle and the pole together. The handle further includes a movable button adapted to allow the first coupling element to act against the elastic member to disengage the rotatable coupling of the handle and the pole. The tool is characterized in that the button acts on the first coupling element by surpassing the second coupling element from the outside of the second coupling element. The first coupling element and the second coupling element are adapted to slide relative to each other in a direction parallel to the central pole axis such that the first coupling element at least partially encloses the second coupling element while engaging with the second coupling element.

Thus, the present disclosure provides a tool that is simple in design and convenient to use. A user can press the movable button to allow the first coupling element to act against the elastic member to disengage the rotatable coupling of the handle and the pole, and therefore this allows the rotation of the pole relative to the handle. In this way, different positions of the implement may be selected based on application and user requirements. As long as the elastic member cooperates with the first coupling element to force the first coupling element to engage with the second coupling element to rotatably couple the handle and the pole together, the pole cannot be rotated relative to the handle. Moreover, for rotating the pole relative to the handle, the tool of the present disclosure does not require any clamping nuts which were used in conventional tools. This may provide the users an ease to shift the implement position in accordance with the application attributes. Hence, the mechanical arrangement between the handle, the first coupling element, the second coupling element, and the elastic member is such that the pole can be easily rotated relative to the handle and the tool of the present disclosure may be used efficiently and effectively in the different positions of the implement. In particular by surpassing the second coupling element by the first coupling element the center of the second coupling element is mechanically unaffected and can independent of the first coupling element mechanically designed according the needs. For example mechanical lines running inside the pole between the implement and an operating means associated with the handle can be designed independent of the fixation mechanism.

According to an exemplary embodiment of the invention, the implement may be removably connected to the second end of the pole. The implement may be a saw blade cutting mechanism, gripping claws, and so on. A user may select the implement based on the required application. Different positions of the implement can be equipped by rotating the pole relative to the handle and improve work efficiency. The implement may be made of steel, brass, or aluminum. However, other materials may also be used to manufacture the implement based on application requirements.

According to an exemplary embodiment of the invention, the first coupling element may be in contact with the handle. The first coupling element may be connected to the handle. The first coupling element may be integral to the handle. This means that the first coupling element may be a part of the handle.

According to an exemplary embodiment of the invention, the second coupling element may be in contact with the first end of the pole. The second coupling element may be connected to the pole. The second coupling element may be integral to the pole. This means that the second coupling element may be a part or an extension of the pole.

According to an exemplary embodiment of the invention, the elastic member may be a coil spring. The coil spring may be a helical spring. In the absence of any external load on the elastic member, the elastic member exerts a biasing force on the first coupling element such that the first coupling element engages with the second coupling element in order to rotatably couple the handle and the pole together.

According to an exemplary embodiment of the invention, the button may extend at least partially outside the handle when the button is not pressed by the user. Upon being pressed by the user, the button exerts a force against the biasing force of the elastic member so as to disengage the first coupling element from the second coupling element. As a result of the disengagement of the first coupling element from the second coupling element, the rotatable coupling between the handle and the pole is disengaged. The button may be made of plastic. In an application, instead of the button, the handle may include a knob or a lever.

According to an exemplary embodiment of the invention, the handle includes an operating means to activate a functionality of the implement. The operating means allows the user to activate the functionality of the implement when required. The operating means may ease the user's task of deactivating or activating the functionality of the implement.

According to an exemplary embodiment of the invention, the operating means may include a trigger which the user can control to activate or deactivate the functionality of the implement. The button and the operating means may be angularly spaced apart from each other with respect to the central pole axis. The user may control the operating means with his/her index finger.

According to an exemplary embodiment of the invention, the pole encloses one or more mechanical elements, such that the one or more mechanical elements allow a mechanical activation. The one or more mechanical elements may allow mechanical activation or deactivation of the functionality of the implement based on a configuration of the operating means. The one or more mechanical elements may allow a transfer of mechanical energy from the operating means to the implement, and therefore, may facilitate activation or deactivation of the functionality of the implement.

According to an exemplary embodiment of the invention, the one or more mechanical elements may include an internal cable (i.e., a wire), a washer, and so on. The cable may be made of, but not limited to, steel for durability and ease of use. The cable may transfer mechanical motion (i.e., energy) between the operating means and the implement.

According to an exemplary embodiment of the invention, the first coupling element includes a first gear. When the button is not pressed by the user, the first gear is engaged with the second coupling element and thereby prevents rotation of the pole relative to the handle. When the button is pressed by the user, the first gear acts against the biasing force of the elastic member and is disengaged from the second coupling element so as to allow the rotation of the pole relative to the handle.

According to an exemplary embodiment of the invention, the first gear includes first teeth. The first teeth may be defined on an internal surface of the first coupling element. The first teeth may be adapted to engage with the second coupling element in order to rotatably couple the handle and the pole together. The first gear may include, instead of the first teeth, any other locking or engaging structure. The first gear may be made of a material comprising plastic or metal.

According to an exemplary embodiment of the invention, the second coupling element includes a second gear adapted to engage with the first gear to rotatably couple the handle and the pole. When the button is not pressed by the user, the first gear is meshed with the second gear and thereby prevents rotation of the pole relative to the handle. When the button is pressed by the user, the first coupling element slides against the biasing force of the elastic member and the first gear is disengaged from the second gear so as to allow the rotation of the pole relative to the handle. Therefore, engagement and disengagement between the first gear and the second gear allows the user to rotate the pole relative to the handle in accordance with the application requirements. In this way, inclusion of the first gear and the second gear may provide convenience to the user for using the tool in the different positions of the implement.

According to an exemplary embodiment of the invention, the second gear includes second teeth. The second teeth may be defined on an outer surface of the second coupling element. The second teeth may be adapted to engage with the first coupling element in order to rotatably couple the handle and the pole together. The second gear may include, instead of the second teeth, any other locking or engaging structure. The second gear may be made of a material comprising plastic or metal.

According to an exemplary embodiment of the invention, the pole is adapted to rotate about the central pole axis. The rotation of the pole about the central pole axis allows the implement to be operated in different positions with respect to the handle. The pole, the elastic member, the first coupling element, and the second coupling element are coaxially arranged to each other.

According to an exemplary embodiment of the invention, the first coupling element is integral to the button. This means that the first coupling element is a part of the button. This may reduce the cost of manufacturing the first coupling element.

According to an exemplary embodiment of the invention, the first coupling element includes a pair of protrusions circumferentially spaced apart from each other and adapted to engage with the handle upon rotation of the handle about the central pole axis. The pair of protrusions may limit the rotation of the handle about the central pole axis.

According to an exemplary embodiment of the invention, the pair of protrusions may extend along the central pole axis. The pair of protrusions may be disposed opposite to each other. The pair of protrusions may be disposed on an external surface of the first coupling element.

Before discussing the invention with the help of the drawings, the invention will be briefly discussed in general. A tool is disclosed which may provide a means for using an implement in different positions (i.e., angular positions). A user may choose a desirable position of the implement based on his/her comfort and application attributes. The tool includes components, such as the first coupling element, the second coupling element, and the elastic member to rotatably couple the handle and the pole together. This rotatable coupling between the handle and the pole allows a relative rotation between the handle and the pole, and thereby change the position of the implement without changing the position of the handle.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** illustrates a perspective side view of a tool including an implement shown in a deactivated configuration, in accordance with an exemplary embodiment of the present disclosure;
**FIG. 2** illustrates a perspective side view of the tool of **FIG. 1** including the implement shown in an activated configuration, in accordance with an exemplary embodiment of the present disclosure;
**FIG. 3** illustrates a perspective side view of the tool of **FIG. 1**, wherein the implement is shown in a position different than that of the position shown in **FIG. 1**, in accordance with an exemplary embodiment of the present disclosure;
**FIG. 4** illustrates a perspective side view of the tool of **FIG. 1****,** wherein the implement is shown in a position different than that of the positions shown in **FIGS. 1** **and** **3**, in accordance with an exemplary embodiment of the present disclosure;
**FIG. 5** illustrates a partial cross-sectional side view of the tool of **FIG. 1**, in accordance with an exemplary embodiment of the present disclosure;
**FIG. 6** illustrates a partial cross-sectional side view of the tool of **FIG. 5**, with some components not shown, in accordance with an exemplary embodiment of the present disclosure;
**FIG. 7** illustrates a partial cross-sectional side view of the tool of **FIG. 6**, wherein a button of the tool is shown as being pressed, in accordance with an exemplary embodiment of the present disclosure;
**FIG. 8** illustrates a partial cross-sectional side view of the tool of **FIG. 6** from another angle, in accordance with an exemplary embodiment of the present disclosure;
**FIG. 9** illustrates a partial cross-sectional side view of the tool of **FIG. 8**, wherein the button of the tool is shown as being pressed, in accordance with an exemplary embodiment of the present disclosure;
**FIG. 10** illustrates an exploded view of a fixation mechanism of the tool of **FIG. 1**, in accordance with an exemplary embodiment of the present disclosure; and
**FIG. 11** illustrates a partial exploded view of the tool of **FIG. 1**, in accordance with an exemplary embodiment of the present disclosure.

### DETAILED DESCRIPTION OF THE DRAWINGS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

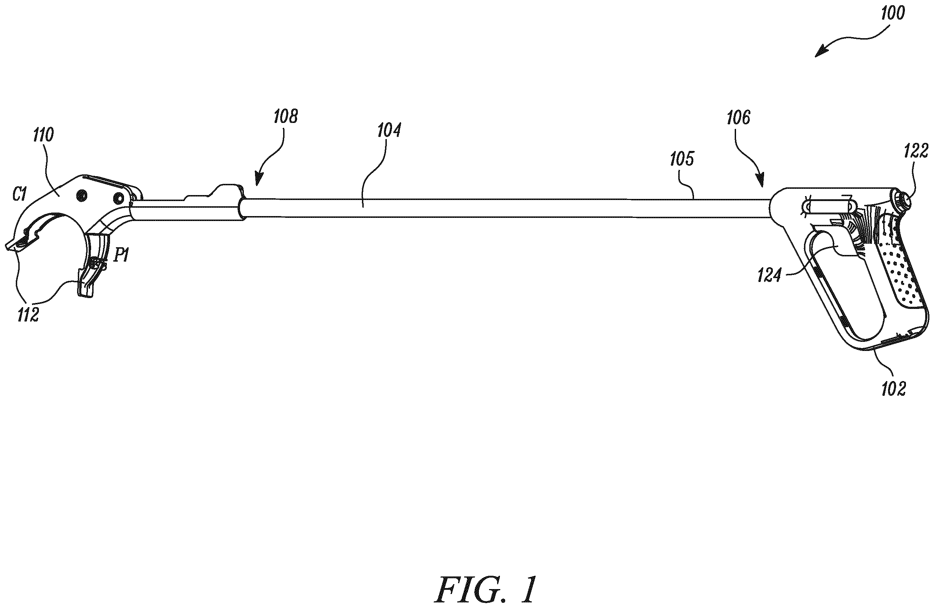

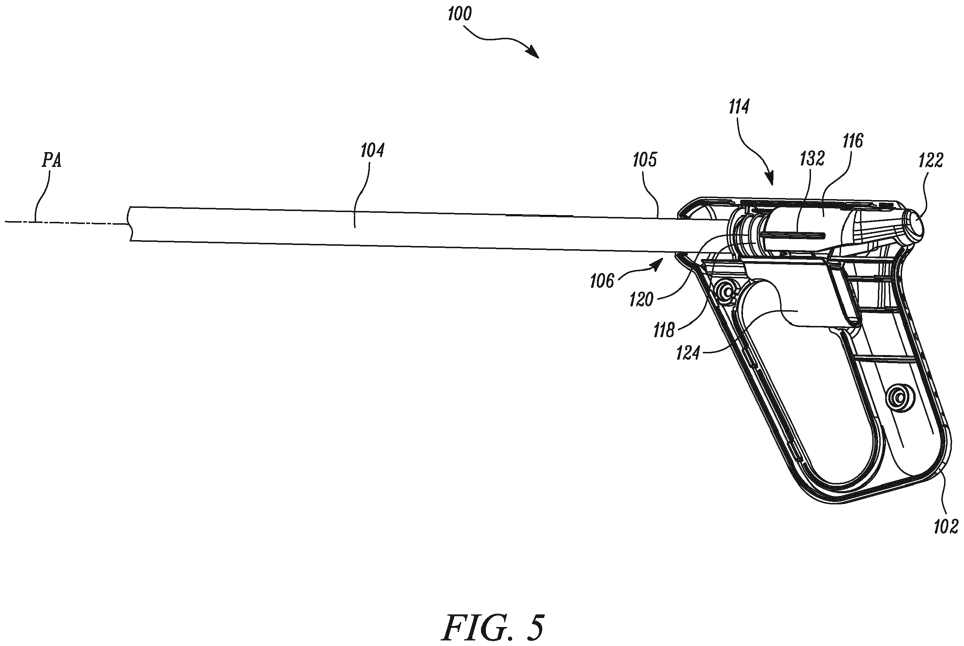

**FIG. 1** illustrates a tool **100** according to an exemplary embodiment of the present invention. The tool **100** includes a handle **102** and a pole **104** rotatably coupled to the handle **102.** The handle **102** may be made of a material including plastic or steel. The pole **104** has a first end **106** proximate to the handle **102** and a second end **108** distal from the handle **102.** The pole **104** extends from the handle **102** from the first end **106** towards the second end **108** along a central pole axis **PA** (shown in **FIG. 5**). The pole **104** may be made of a material including plastic or steel. The pole **104** may have a circular cross section.

The tool **100** further includes an implement **110** fixed to the second end **108** of the pole **104.** In the illustrated embodiment of **FIG. 1**, the implement **110** is a gripper or a pincer used to pick up an object (e.g., waste) from the floor, top shelf, outdoor lawn, trash can, behind furniture, or other hard to reach places. The tool **100** including the implement **110** may increase the reach of a user to pick or grab various items at a distance. The implement **110** includes a pair of gripping members or claws **112** adapted to grab the objects. In **FIG. 1**, the implement **110** is shown in a deactivated configuration **C1** as the pair of gripping members is open. Further, in **FIG. 1**, the implement **110** is shown in a first position **P1**. The implement **110** may be removably connected to the second end **108** of the pole **104.** According to an exemplary embodiment, the pole **104** is adapted to rotate about the central pole axis **PA**, which will be discussed later in detail.

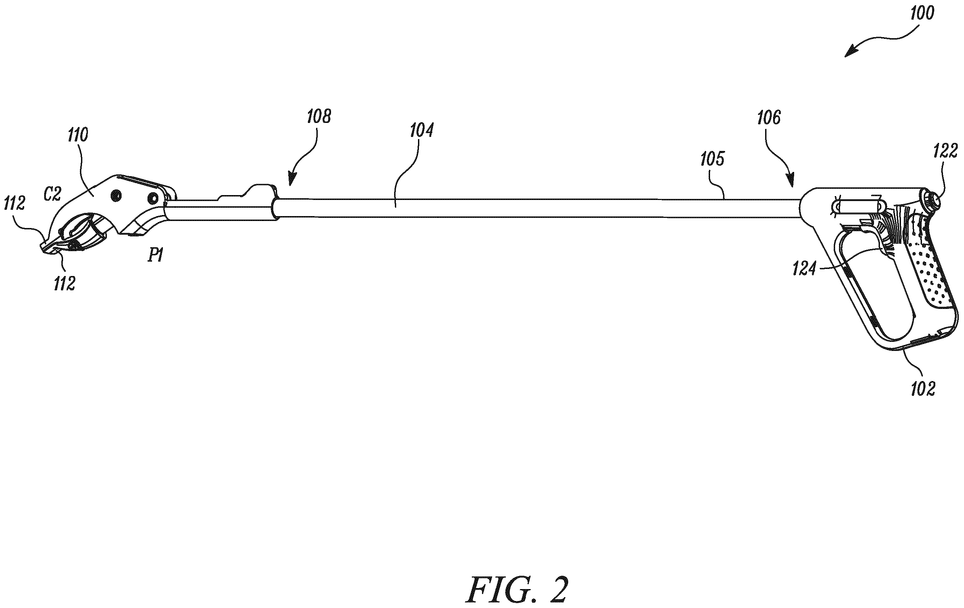

**FIG. 2** illustrates the tool **100** according to an exemplary embodiment of the present invention, wherein the implement **110** is shown in an activated configuration **C2** as the pair of the gripping members **112** is closed. In the activated configuration **C2** of the implement **110**, the tool **100** may be used as the gripper to pick various objects or items. In **FIG. 2**, the implement **110** is shown again in the first position **P1.** Referring to **FIG. 1** and **FIG. 2**, there is no relative rotation between the handle **102** and the pole **104.**

According to an exemplary embodiment, the handle **102** includes an operating means **124** to activate a functionality of the implement **110.** The operating means **124** allows the user to activate the functionality of the implement **110** when required. The operating means **124** may ease the user's task of deactivating or activating the functionality of the implement **110.** The operating means **124** is a trigger which the user can control to activate or deactivate the functionality of the implement **110.** For example, the user may press the operating means **124** to switch the implement **110** from the deactivated configuration **C1** (shown in **FIG. 1**) to the activated configuration **C2** (shown in **FIG. 2**). The user may control the operating means **124** with his/her index finger. In **FIG. 2**, the operating means **124** is shown as being pressed.

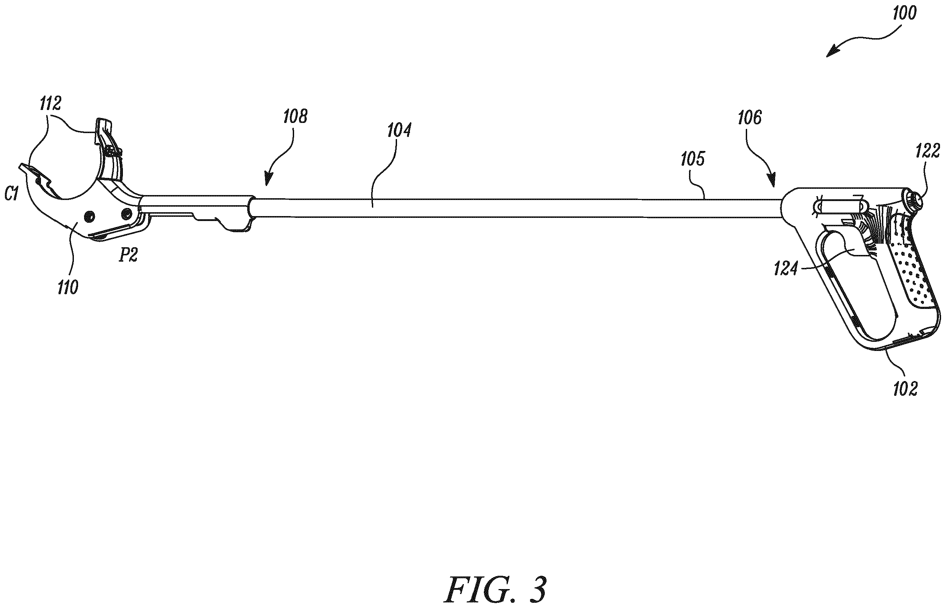

**FIG. 3** illustrates the tool **100** according to an exemplary embodiment of the present invention, wherein the implement **110** is shown in the deactivated configuration **C1** and a second position **P2** different from the first position **P1** (shown in **FIG. 1**). Referring to **FIG. 1** and **FIG. 3**, it can be concluded that the implement **110** is switched between the first position **P1** and the second position **P2** due to relative rotation between the handle **102** and the pole **104.** Specifically, the implement **110** is switched between the first position **P1** and the second position **P2** due to the rotation of the pole **104** with respect to the handle **102.**

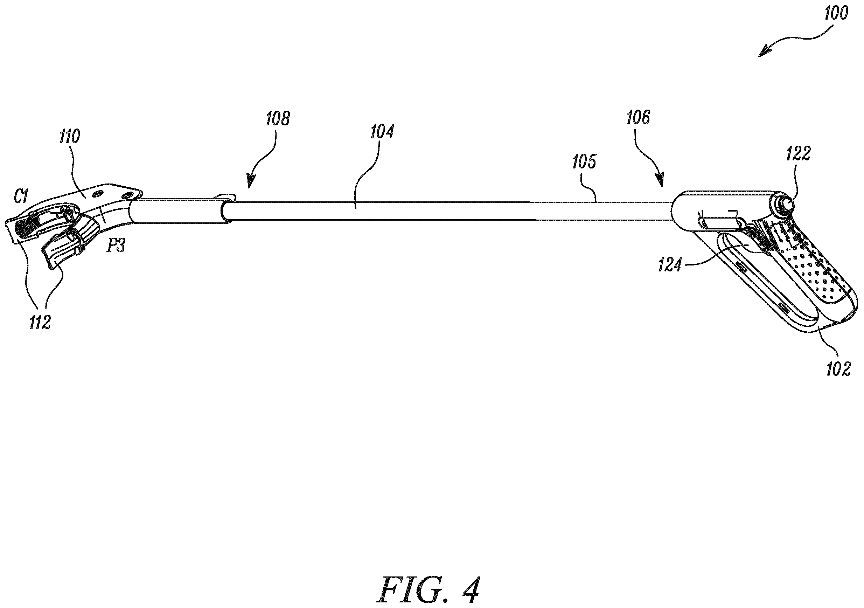

**FIG. 4** illustrates the tool **100** according to an exemplary embodiment of the present invention, wherein the implement **110** is shown in the deactivated configuration **C1** and a third position **P3** different from each of the first position **P1** (shown in **FIG. 1**) and the second position **P2** (shown in **FIG. 3**). Referring to **FIG. 1** and **FIG. 4**, it can be concluded that the implement **110** is switched between the first position **P1** and the third position **P3** due to relative rotation between the handle **102** and the pole **104.** Specifically, the implement **110** is switched between the first position **P1** and the third position **P3** due to the rotation of the pole **104** with respect to the handle **102.** Moreover, the implement **110** can be switched between the second position **P2** (shown in **FIG. 3**) and the third position **P3** due to the rotation of the pole **104** with respect to the handle **102.**

**FIG. 5** illustrates a partial cross sectional side view of the tool **100** according to an exemplary embodiment of the present invention. The implement **110** is not shown in **FIG. 5** for illustrative purposes. The tool **100** further includes a fixation mechanism **114** for coupling the handle **102** and the pole **104** together. The fixation mechanism **114** includes a first coupling element **116** associated with the handle **102.** The first coupling element **116** may be in contact with the handle **102.** The first coupling element **116** may be connected to the handle **102.**

According to an exemplary embodiment, the first coupling element **116** includes a pair of protrusions **132** circumferentially spaced apart from each other and adapted to engage with the handle **102** upon rotation of the handle **102** about the central pole axis **PA.** This means that the pair of protrusions **132** limit the rotation of the handle **102** about the central pole axis **PA.**

The fixation mechanism **114** further includes a second coupling element **118** associated with an outer surface **105** of the pole **104**, such that the first coupling element **116** and the second coupling element **118** are adapted to be selectively engaged together to couple the handle **102** and the pole **104.** The second coupling element **118** may be in contact with the first end **106** of the pole **104.** The second coupling element **118** may be connected to the pole **104.**

The fixation mechanism **114** further includes an elastic member **120** coupled with the pole **104** such that the elastic member **120** cooperates with the first coupling element **116** to force the first coupling element **116** to engage with the second coupling element **118** to rotatably couple the handle **102** and the pole **104** together. The elastic member **120** may be a coil spring. In the absence of any external load on the elastic member **120**, the elastic member 120 exerts a biasing force on the first coupling element **116** such that the first coupling element 116 engages with the second coupling element **118** in order to rotatably couple the handle **102** and the pole **104** together.

When the first coupling element **116** is engaged with the second coupling element **118**, the pole **104** cannot be rotated relative to the handle **102** as the pair of protrusions **132** may contact a portion of the handle **102** and limit the rotation of the handle **102.** Therefore, for the relative rotation of the pole **104** and the handle **102**, the first coupling element **116** must be disengaged from the second coupling element **118.**

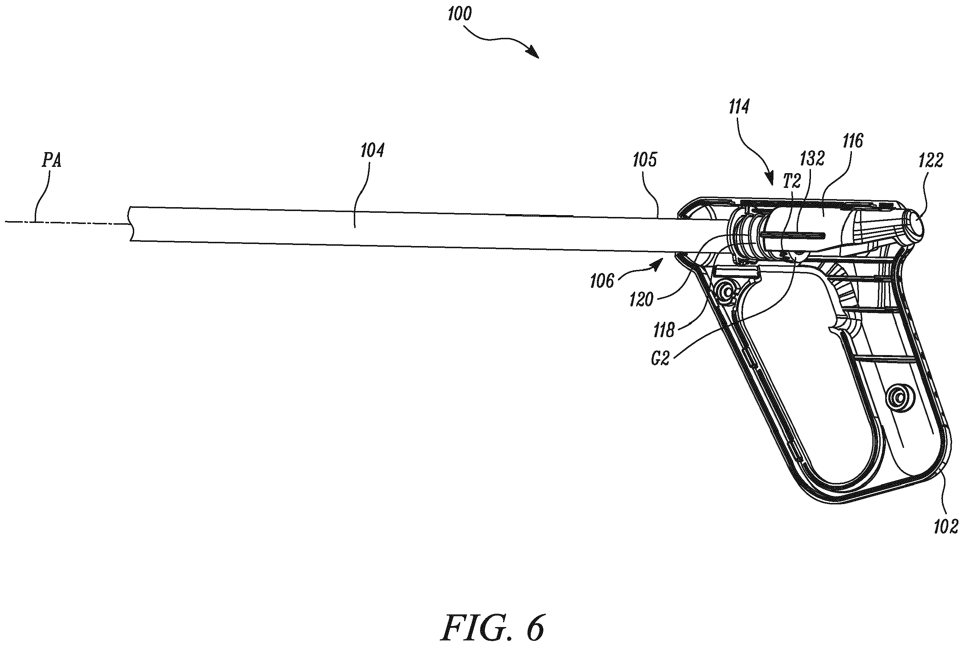

**FIG. 6** illustrates another partial cross sectional side view of the tool **100** according to an exemplary embodiment of the present invention. The implement **110** and the operating means **124** are not shown in **FIG. 6** for illustrative purposes. The handle **102** includes a movable button **122** adapted to allow the first coupling element **116** to act against the elastic member **120** to disengage the rotatable coupling of the handle **102** and the pole **104.** The button **122** extends at least partially outside the handle **102** when the button **122** is not pressed by the user.

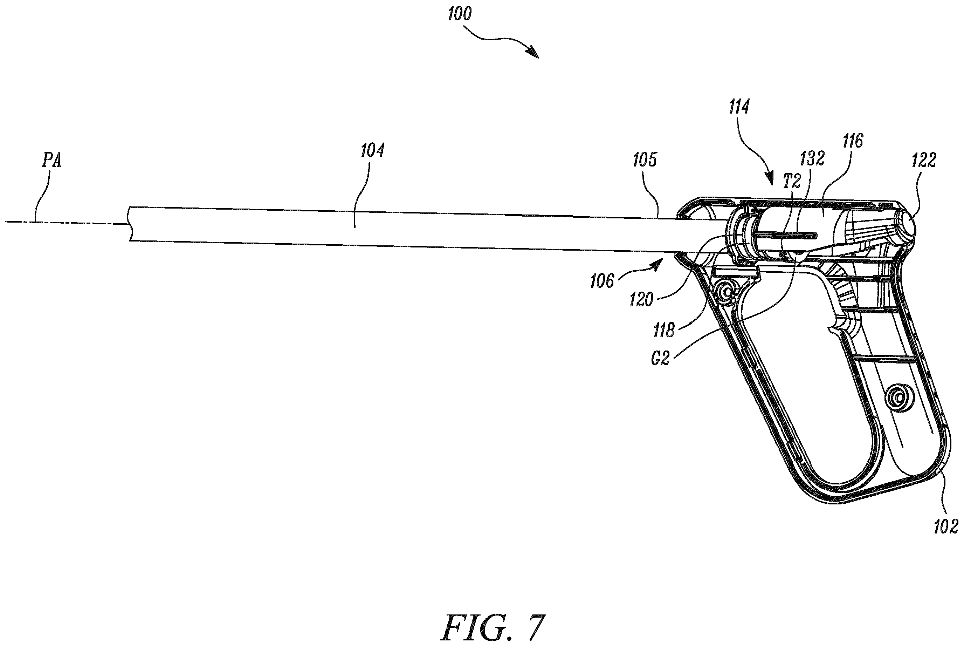

**FIG. 7** illustrates a partial cross-sectional side view of the tool **100** of **FIG. 6**, wherein the button **122** is shown as being pressed, in accordance with an exemplary embodiment of the present disclosure. Upon being pressed by the user, the button **122** exerts a force against the biasing force of the elastic member **120** so as to disengage the first coupling element **116** from the second coupling element **118.** As a result of the disengagement of the first coupling element **116** from the second coupling element **118**, the rotatable coupling between the handle **102** and the pole **104** is disengaged. The button **122** may be made of plastic.

According to an exemplary embodiment of the invention, the first coupling element **116** is integral to the button **122.** This means that the first coupling element **116** is a part of the button **122.** This may reduce the cost of manufacturing the first coupling element **116.**

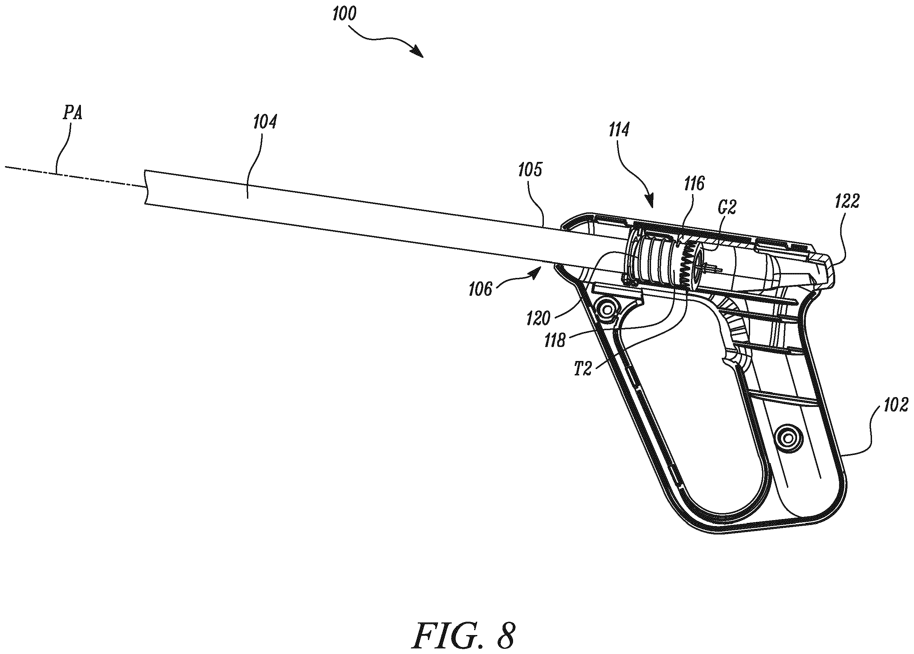

**FIG. 8** illustrates a partial cross-sectional side view of the tool **100** of **FIG. 6** from another angle, in accordance with an exemplary embodiment of the present disclosure. The button **122** acts on the first coupling element **116** by surpassing the second coupling element **118** from the outside of the second coupling element **118.** The first coupling element **116** and the second coupling element **118** are adapted to slide relative to each other in a direction parallel to the central pole axis **PA** such that the first coupling element **116** at least partially encloses the second coupling element **118** while engaging with the second coupling element **118.** In other words, when the button **122** is pressed by the user, the first coupling element **116** slides relative to the second coupling element **118** along the central pole axis **PA** and exerts the force to compress the elastic member **120.**

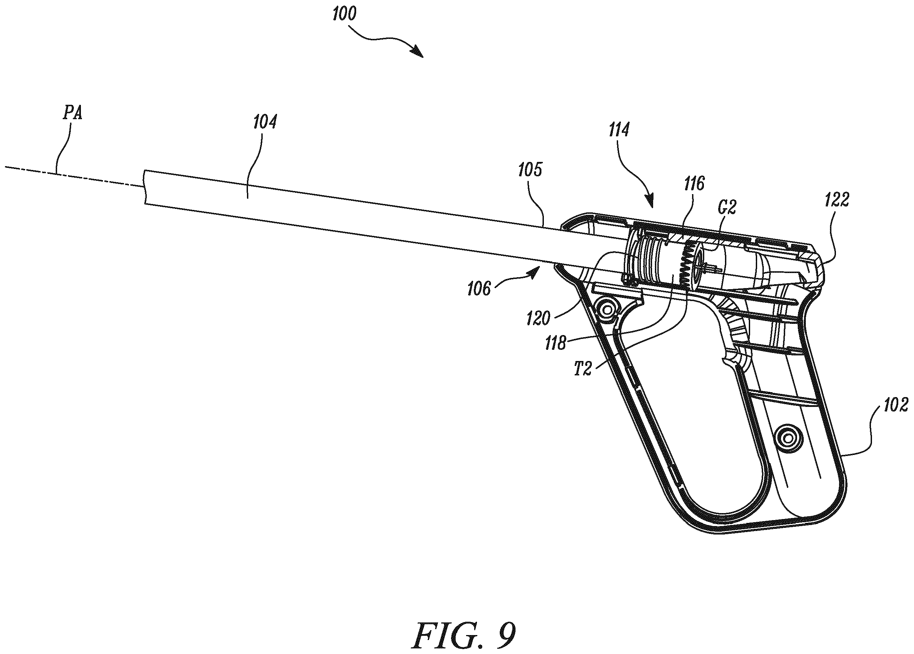

**FIG. 9** illustrates a partial cross-sectional side view of the tool **100** of **FIG. 8**, wherein the button **122** is shown as being pressed, in accordance with an exemplary embodiment of the present disclosure. The elastic member **120** is not shown in **FIG. 9** for illustrative purposes. The tool **100** is characterized in that the button **122** acts on the first coupling element **116** by surpassing the second coupling element **118** from the outside of the second coupling element **118.** The first coupling element **116** and the second coupling element **118** slide relative to each other in a direction parallel to the central pole axis **PA** such that the first coupling element **116** at least partially encloses the second coupling element **118** while engaging with the second coupling element **118.** When the button **122** is pressed by the user, the first coupling element **116** slides relative to the second coupling element **118** along the central pole axis **PA** and exerts the force to compress the elastic member **120.**

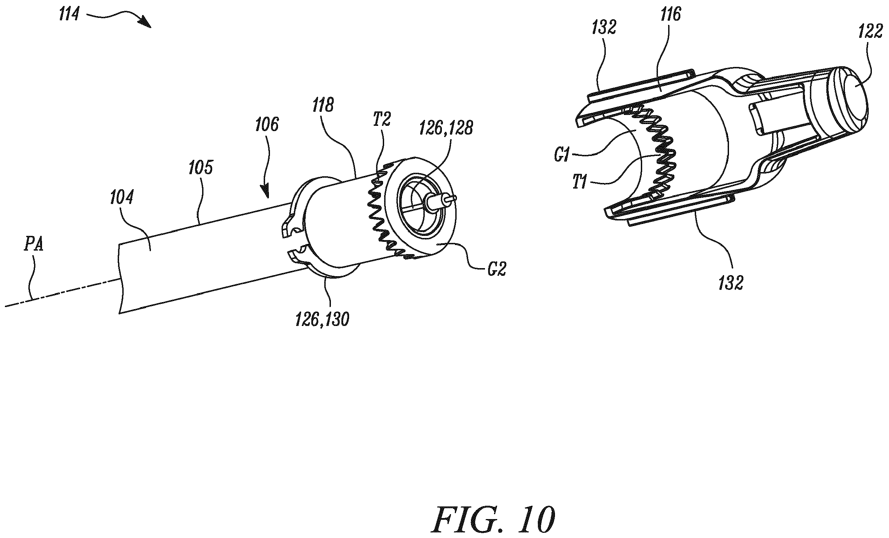

**FIG. 10** illustrates an exploded view of the fixation mechanism **114** of the tool **100** of **FIG. 1**, in accordance with an exemplary embodiment of the present disclosure. The first coupling element **116** includes a first gear **G1.** The first gear **G1** includes first teeth **T1** defined on an internal surface of the first coupling element **116.** The second coupling element **118** includes a second gear **G2** adapted to engage with the first gear **G1** to rotatably couple the handle **102** and the pole **104.** The second gear **G2** includes second teeth **T2** defined on an outer surface of the second coupling element **118.**

When the button **122** is not pressed by the user, the first gear **G1** is meshed with the second gear **G2** and thereby prevents rotation of the pole **104** relative to the handle **102.** When the button **122** is pressed by the user, the first coupling element **116** slides against the biasing force of the elastic member **120** and the first gear **G1** is disengaged from the second gear **G2** so as to allow the rotation of the pole **104** relative to the handle **102.** Therefore, engagement and disengagement between the first gear **G1** and the second gear **G2** allows the user to rotate the pole **104** relative to the handle **102** in accordance with the application requirements. In this way, inclusion of the first gear **G1** and the second gear **G2** may provide convenience to the user for using the tool **100** in the different positions (i.e., the first position **P1**, the second position **P2**, and so on) of the implement **110.**

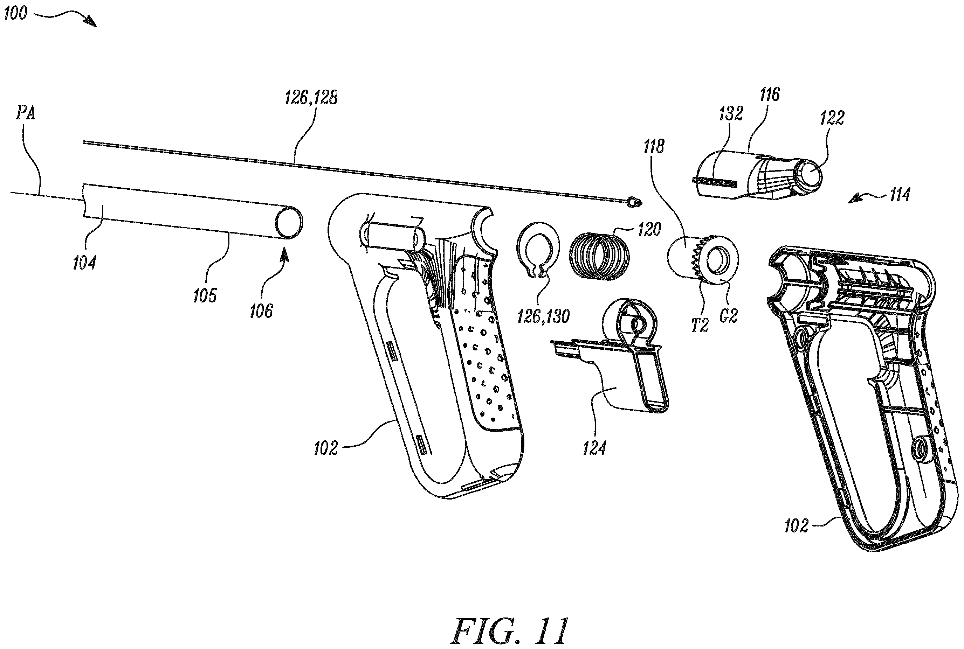

**FIG. 11** illustrates a partial exploded view of the tool **100** of **FIG. 1**, in accordance with an exemplary embodiment of the present disclosure. The pole **104** encloses one or more mechanical elements **126**, such that the one or more mechanical elements **126** allow a mechanical activation. The one or more mechanical elements **126** may allow mechanical activation or deactivation of the functionality of the implement **110** based on a configuration of the operating means **124**. The one or more mechanical elements **126** may allow a transfer of mechanical energy from the operating means **124** to the implement **110**, and therefore, may facilitate activation or deactivation of the functionality of the implement **110.** The one or more mechanical elements **126** include an internal cable **128**, a washer **130**, and so on. The cable **128** may transfer mechanical motion (i.e., energy) between the operating means **124** and the implement **110.**

The present disclosure provides the tool **100** that is simple in design and convenient to use. The user can press the movable button **122** to allow the first coupling element **116** to act against the elastic member **120** to disengage the rotatable coupling of the handle **102** and the pole **104**, and this allows the rotation of the pole **104** relative to the handle **102.** In this way, different positions (i.e., the first position **P1**, the second position **P2**, the third position **P3**, and so on) of the implement **110** may be selected based on application and user requirements. As long as the elastic member **120** cooperates with the first coupling element **116** to force the first coupling element **116** to engage with the second coupling element **118** to rotatably couple the handle **102** and the pole **104** together, the pole **104** cannot be rotated relative to the handle **102.** Moreover, for rotating the pole **104** relative to the handle **102**, the tool **100** of the present disclosure does not require any clamping nuts which were used in conventional tools. This may provide the user with an ease to shift the implement position in accordance with the application attributes. Hence, the mechanical arrangement between the handle **102**, the first coupling element **116**, the second coupling element **118**, and the elastic member **120** is such that the pole **104** can be easily rotated relative to the handle **102** and the tool **100** of the present disclosure may be used efficiently and effectively in the different positions of the implement **110.**

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: Tool
- **102**: Handle
- **104**: Pole
- **106**: First End
- **108**: Second End
- **105**: Outer Surface
- **110**: Implement
- **112**: Gripping Members
- **114**: Fixation Mechanism
- **116**: First Coupling Element
- **118**: Second Coupling Element
- **120**: Elastic Member
- **122**: Button
- **124**: Operating Means
- **126**: Mechanical Element
- **128**: Cable
- **130**: Washer
- **132**: Protrusion
- **PA**: Central Pole Axis
- **G1**: First Gear
- **G2**: Second Gear
- **T1**: First Teeth
- **T2**: Second Teeth
- **C1**: Deactivated Configuration
- **C2**: Activated Configuration
- **P1**: First Position
- **P2**: Second Position
- **P3**: Third Position

## Claims

1. A tool **(100)** comprising:
a handle **(102)**;
a pole **(104)** rotatably coupled to the handle **(102)**, wherein the pole **(104)** has a first end **(106)** proximate to the handle **(102)** and a second end **(108)** distal from the handle **(102)** such that the pole **(104)** extends from the handle **(102)** from the first end **(106)** towards the second end **(108)** along a central pole axis **(PA)**;
an implement **(110)** fixed to the second end **(108)** of the pole **(104)**;
a fixation mechanism **(114)** for coupling the handle **(102)** and the pole **(104)** together, the fixation mechanism **(114)** comprising:
a first coupling element **(116)** associated with the handle **(102)**;
a second coupling element **(118)** associated with an outer surface **(105)** of the pole **(104)**, such that the first coupling element **(116)** and the second coupling element **(118)** are adapted to be selectively engaged together to couple the handle **(102)** and the pole **(104)**;
an elastic member **(120)** coupled with the pole **(104)** such that the elastic member **(120)** cooperates with the first coupling element **(116)** to force the first coupling element **(116)** to engage with the second coupling element **(118)** to rotatably couple the handle **(102)** and the pole **(104)** together;
wherein the handle **(102)** further comprises a movable button **(122)** adapted to allow the first coupling element **(116)** to act against the elastic member **(120)** to disengage the rotatable coupling of the handle **(102)** and the pole **(104)**;
**characterized in that:**
the button **(122)** acts on the first coupling element **(116)** by surpassing the second coupling element **(118)** from the outside of the second coupling element **(118)**; and
the first coupling element **(116)** and the second coupling element **(118)** are adapted to slide relative to each other in a direction parallel to the central pole axis **(PA)** such that the first coupling element **(116)** at least partially encloses the second coupling element **(118)** while engaging with the second coupling element **(118)**.

2. The tool **(100)** of claim 1, wherein the handle **(102)** comprises an operating means **(124)** to activate a functionality of the implement **(110).**

3. The tool **(100)** of claim 2, wherein the pole **(104)** encloses one or more mechanical elements **(126)**, such that the one or more mechanical elements **(126)** allow a mechanical activation.

4. The tool **(100)** according to any one of the preceding claims, wherein the first coupling element **(116)** comprises a first gear **(G1).**

5. The tool **(100)** of claim 4, wherein the second coupling element **(118)** comprises a second gear **(G2)** adapted to engage with the first gear **(G1)** to rotatably couple the handle **(102)** and the pole **(104).**

6. The tool **(100)** according to any one of the preceding claims, wherein the pole **(104)** is adapted to rotate about the central pole axis **(PA).**

7. The tool **(100)** according to any one of the preceding claims, wherein the first coupling element **(116)** is integral to the button **(122).**

8. The tool **(100)** according to any one of the preceding claims, wherein the first coupling element **(116)** comprises a pair of protrusions **(132)** circumferentially spaced apart from each other and adapted to engage with the handle **(102)** upon rotation of the handle **(102)** about the central pole axis **(PA).**

## Amended claims

### Amended claims in accordance with Rule 137(2) EPC.

1. A tool **(100)** comprising:
a handle **(102)**;
a pole **(104)** rotatably coupled to the handle **(102)**, wherein the pole **(104)** has a first end **(106)** proximate to the handle **(102)** and a second end **(108)** distal from the handle **(102)** such that the pole **(104)** extends from the handle **(102)** from the first end **(106)** towards the second end **(108)** along a central pole axis **(PA)**;
an implement **(110)** fixed to the second end **(108)** of the pole **(104)**;
a fixation mechanism **(114)** for coupling the handle **(102)** and the pole **(104)** together, the fixation mechanism **(114)** comprising:
a first coupling element **(116)** associated with the handle **(102)**;
a second coupling element **(118)** associated with an outer surface **(105)** of the pole **(104)**, such that the first coupling element **(116)** and the second coupling element **(118)** are adapted to be selectively engaged together to couple the handle **(102)** and the pole **(104)**, thereby preventing rotation of the pole **(104)** relative to the handle **(102)**;
an elastic member **(120)** coupled with the pole **(104)** such that the elastic member **(120)** cooperates with the first coupling element **(116)** to force the first coupling element **(116)** to engage with the second coupling element **(118)** to rotatably couple the handle **(102)** and the pole **(104)** together;
wherein the handle **(102)** further comprises a movable button **(122)** adapted to allow the first coupling element **(116)** to act against the elastic member **(120)** to disengage the rotatable coupling of the handle **(102)** and the pole **(104)**;
**characterized in that:**
the button **(122)** acts on the first coupling element **(116)** by surpassing the second coupling element **(118)** from the outside of the second coupling element **(118)**; and
the first coupling element **(116)** and the second coupling element **(118)** are adapted to slide relative to each other in a direction parallel to the central pole axis **(PA)** such that the first coupling element **(116)** at least partially encloses the second coupling element **(118)** while engaging with the second coupling element **(118).**

2. The tool **(100)** of claim 1, wherein the handle **(102)** comprises an operating means **(124)** to activate a functionality of the implement **(110).**

3. The tool **(100)** of claim 2, wherein the pole **(104)** encloses one or more mechanical elements **(126)**, such that the one or more mechanical elements **(126)** allow a mechanical activation.

4. The tool **(100)** according to any one of the preceding claims, wherein the first coupling element **(116)** comprises a first gear **(G1).**

5. The tool **(100)** of claim 4, wherein the second coupling element **(118)** comprises a second gear **(G2)** adapted to engage with the first gear **(G1)** to rotatably couple the handle **(102)** and the pole **(104).**

6. The tool **(100)** according to any one of the preceding claims, wherein the pole **(104)** is adapted to rotate about the central pole axis **(PA).**

7. The tool **(100)** according to any one of the preceding claims, wherein the first coupling element **(116)** is integral to the button **(122).**

8. The tool **(100)** according to any one of the preceding claims, wherein the first coupling element **(116)** comprises a pair of protrusions **(132)** circumferentially spaced apart from each other and adapted to engage with the handle **(102)** upon rotation of the handle **(102)** about the central pole axis **(PA).**
